(19) Europäisches Patentamt
European Patent Office
Office européen des brevets

(11) **EP 4 746 365 A1**

(12) **EUROPEAN PATENT APPLICATION**
published in accordance with Art. 153(4) EPC

(43) Date of publication:
**20.05.2026 Bulletin 2026/21**

(21) Application number: **24844502.5**

(22) Date of filing: **25.06.2024**

(51) International Patent Classification (IPC):
**H04L 41/16** (2022.01)

(52) Cooperative Patent Classification (CPC):
**H04L 41/16**

(86) International application number:
**PCT/CN2024/101231**

(87) International publication number:
**WO 2025/020808 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.07.2023 CN 202310906270**

(71) Applicant: **ZTE CORPORATION**
**Shenzhen, Guangdong 518057 (CN)**

(72) Inventors:
- **WANG, Dajiang**
  **Shenzhen, Guangdong 518057 (CN)**
- **YANG, Sanwei**
  **Shenzhen, Guangdong 518057 (CN)**
- **WANG, Zhenyu**
  **Shenzhen, Guangdong 518057 (CN)**
- **JIA, Kui**
  **Shenzhen, Guangdong 518057 (CN)**

(74) Representative: **Canzler & Bergmeier**
**Patentanwälte**
**Partnerschaft mbB**
**Despag-Straße 6**
**85055 Ingolstadt (DE)**

(54) **NETWORK ENERGY EFFICIENCY OPTIMIZATION METHOD, COMPUTER DEVICE, AND COMPUTER-READABLE STORAGE MEDIUM**

(57) Provided in the present disclosure is a network energy efficiency optimization method. The method comprises: using a digital twin reinforcement learning network model for learning, so as to obtain an action policy for a plurality of services to be optimized; traversing all service establishment states according to the action policy, and determining service path establishment actions having optimal global energy efficiency in the service establishment states, so as to obtain a sequence of service path establishment actions having the optimal global energy efficiency; and according to the sequence of service path establishment actions having the optimal global energy efficiency, determining a path distribution having the optimal energy efficiency for said services. Further provided in the present disclosure are a computer device and a computer-readable storage medium.

determine an action policy for a plurality of services to be optimized by using a pre-trained action policy learning model, the action policy learning model being a DT deep reinforcement learning network model, and an energy consumption optimization objective function of the action policy learning model being the minimum sum of a workload energy consumption and an equipment energy consumption of the plurality of services to be optimized, and an actual total return of a trajectory of the action policy learning model being an instant reward in a last service establishment state in the trajectory — S11

traverse all service establishment states based on the action policy, to determine a service path establishment action for an optimized global energy efficiency in each service establishment state, and obtain a service path establishment action sequence for an optimal global energy efficiency — S12

determine a path distribution, for the optimal global energy efficiency, of the plurality of services to be optimized based on the service path establishment action sequence — S13

FIG. 1

**Description**

CROSS REFERENCE TO RELATED APPLICATIONS

The present disclosure claims the priority to Chinese Patent Application No. 202310906270.8 filed on July 21, 2023, the contents of which are incorporated herein by reference in their entirety.

TECHNICAL FIELD

The present disclosure relates to the technical field of Autonomous Optical Transport Networks (AN OTNs for short), and in particular, to a network energy efficiency optimization method, a computer device, and a computer-readable storage medium.

BACKGROUND

The global communication industry is evolving from the connectivity era and the cloud era to the intelligent era. In the face of the challenges such as network planning, optimization, operation and maintenance, reliability, agility, and reduction of Operating Expenses (OPEX) caused by market competition, full-industry digital transformation, and increase in network complexity, the development of OTNs towards intelligence is inevitable. The emergence and rise of the AN OTN technology provide a solid foundation and a main means for achieving the goal of intelligence of the OTNs.

SUMMARY

In an aspect, an embodiment of the present disclosure provides a method for optimizing network energy efficiency, including: determining an action policy for a plurality of services to be optimized based on a pre-trained action policy learning model, the action policy learning model being a digital twin deep reinforcement learning network model, an energy consumption optimization objective function of the action policy learning model being a minimum sum of a workload energy consumption and an equipment energy consumption of the plurality of services to be optimized, and an actual total return of a trajectory of the action policy learning model being an instant reward in a last service establishment state in the trajectory; traversing all service establishment states based on the action policy, determining a service path establishment action for an optimized global energy efficiency in each service establishment state, to obtain a service path establishment action sequence for an optimal global energy efficiency; and determining a path distribution, for the optimal global energy efficiency, of the plurality of services to be optimized based on the service path establishment action sequence.

In another aspect, an embodiment of the present disclosure provides a computer device, including: at least one processor; and a storage device having stored at least one computer program therein, the at least one computer program is to be executed by the at least one processor to cause the at least one processor to implement the method for optimizing network energy efficiency as described above.

In further another aspect, an embodiment of the present disclosure provides a computer-readable storage medium having stored therein a computer program, the computer program is to be executed by a processor, to cause the processor to implement the method for optimizing network energy efficiency as described above.

BRIEF DESCRIPTION OF DRAWINGS

FIG. 1 is a flowchart illustrating a method for optimizing network energy efficiency according to an embodiment of the present disclosure.
FIG. 2 is a schematic diagram of an action policy learning model obtained by being trained using a Q-Based Actor-Critic (QAC) algorithm according to an embodiment of the present disclosure.
FIG. 3 is a flowchart of determining a service path establishment action for an optimized global energy efficiency in a service establishment state according to an embodiment of the present disclosure.
FIG. 4a to FIG. 4e are schematic diagrams illustrating a determination of a service path establishment action for an optimized global energy efficiency by using the Monte Carlo Tree Search (MCTS) algorithm according to an embodiment of the present disclosure.
FIG. 5 is a flowchart illustrating a method for optimizing network energy efficiency according to an embodiment of the present disclosure.
FIG. 6 is a schematic diagram of a resource-interlock optimization scenario according to an embodiment of the present disclosure.

FIG. 7 is a schematic diagram of a resource-independent optimization scenario according to an embodiment of the present disclosure.

FIG. 8 is a flowchart of optimizing service paths to be optimized in a resource-interlock optimization scenario according to an embodiment of the present disclosure.

FIG. 9 is a schematic diagram illustrating an optimization of service paths to be optimized in a resource-interlock optimization scenario according to an example of the present disclosure.

FIG. 10 is a schematic diagram illustrating an unlock time or an optimization time for each service path to be optimized in FIG. 9.

FIG. 11 is a flowchart of optimizing service paths to be optimized in a resource-independent optimization scenario according to an embodiment of the present disclosure.

FIG. 12 is a schematic diagram illustrating an optimization of service paths to be optimized in a resource-independent optimization scenario according to an example of the present disclosure.

FIG. 13 is a schematic diagram illustrating an unlock time or an optimization time for each service path to be optimized in FIG. 12.

FIG. 14 is a flowchart illustrating a method for optimizing network energy efficiency according to an example of the present disclosure.

## DETAIL DESCRIPTION OF EMBODIMENTS

Exemplary implementations will be described more fully below with reference to the drawings, but the exemplary implementations may be implemented in different forms and should not be interpreted as being limited thereto. The implementations are provided to make the present disclosure thorough and complete, and to enable those of ordinary skill in the art to fully understand the scope of the present disclosure.

The term "and/or" used herein includes any and all combinations of at least one associated listed item.

The terms used herein are merely used to describe specific embodiments, but do not limit the present disclosure. As used herein, "a/an", "the" or the like which indicate a singular form include a plural form, unless expressly stated otherwise in the context. It should be further understood that the terms "include/comprise", "be made/consist of" or the like used herein indicate the presence of a specified feature, integer, operation, element and/or component, but do not exclude the presence or addition of at least one another feature, integer, operation, element, component and/or combination thereof.

The implementations described herein can be described with reference to plans and/or cross-sectional views with the aid of idealized schematic diagrams of the present disclosure. Accordingly, the exemplary drawings may be modified according to manufacturing techniques and/or tolerances. Therefore, the implementations are not limited to those illustrated by the drawings, but include modifications to configurations formed based on a manufacturing process. Thus, regions shown in the drawings are illustrative, and shapes of the regions shown in the drawings illustrate specific shapes of regions of elements, but do not make limitations.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the related technology and the background of the present disclosure, and should not be interpreted in an idealized or overly formal sense unless expressly so defined herein.

The AN OTN technology originates from the concept of "Autonomous Network" (AN for short) proposed by TM Forum in 2019. After several years of development, the concept of AN has gained industry-wide consensus, aims to enable digital transformation of operator networks through integration of network technology and digital technology, so as to provide vertical industries and consumer users with innovative Information and Communication Technology (ICT) services and user experience without wait, touch and failure, and develop network capabilities of self-configuration, self-healing and self-optimization in an entire lifecycle of operating of the operator networks. Therefore, the AN OTN technology derived and developed on the basis can achieve intelligent goals of OTNs such as intelligent management, ultimate experience, and flexibility and openness through intelligent operation and maintenance capabilities of self-configuration, self-recovery, and self-optimization, so as to meet customer requirements of improving the user experience and reducing the OPEX.

Among the intelligent capabilities desired by the AN OTNs, identification and optimization of an energy efficiency problem are core capabilities for realizing the OTNs being autonomous. Currently, as the global warming trend, energy conservation, consumption reduction and carbon emission reduction have significant international economic and political significance.

Moreover, the emerging Digital Twin (DT) technology enters a rapid development period, and is widely applied to the fields of manufacturing and supply chains to support industrial digital transformation. The digital transformation in the telecommunication field also has a strong demand for the DT technology, and the DT technology is considered as a foundation of the digital transformation and an important support and component for realizing the AN architecture and technology. By accurately perceiving its own states and states of an external environment, a DT network establishes a digital mirror between an internal environment and the external environment, integrates capabilities of simulation and prevention and prediction, to play a key enabling technical role in scenarios such as low-cost trial and error scenarios, intelligent decision-making scenarios, and predictive maintenance scenarios.

The DT technology may be understood that, a digital (virtual) model of a physical object is constructed in a digital space, and the model is continuously corrected and a state of the model is continuously updated by using data from the physical object, so that the model can be kept to be consistent with the physical object in an entire lifecycle, and can mirror real-time running states of the physical object with high fidelity, and the model becomes a digital twin body (DT for short) of the physical object. Based on the DT, monitoring, analysis, predicting, diagnosing, training, and simulation may be performed, and simulation results may be fed back to the physical object, so as to facilitate optimization and decision-making of the physical object. The techniques related to construction of a DT model, real-time updating of states of the digital model, and DT-based simulation analysis and control decision may be collectively referred to as the DT technology. As can be seen from above, how to combine structural characteristics and state characteristics of the physical object subjected to twin mirroring and DT application scenarios to construct a DT model is a key DT technique.

In summary, it becomes a focus issue concerned and to be solved in the industry as to how to effectively identify and optimize a low energy efficiency problem in an operation of OTN by adopting DT modeling and analyzing technology, and how to try to make the impact of measures for optimizing energy efficiency on operation of existing networks be minimal and unperceptive to users.

The present disclosure provides a method for identifying and optimizing an OTN energy efficiency problem by using the DT modeling technology, and the method is applicable to OTNs, Packet Transport Networks (PTNs), Packet Optical Transport Networks (POTNs), Slicing Packet Networks (SPN), IP networks, or the like. The application to the OTNs is taken as an example for illustration in the present disclosure.

It is assumed that n OTN services are to be created under an environmental condition of a given OTN network topology (including mesh topology, star topology, and the like). In the present disclosure, creating an OTN service refers to creating a service in an Optical Channel Data Unit (ODU) layer of an OTN, and Optical Channel with full functionality (OCH) resources of the network topology sufficiently meet expectations for creating the n OTN services, with n>1. An action policy learning model for creating the n OTN services is defined as follows 1 to 6.

### 1. Definition of an OTN optimization objective function

The OTN optimization objective function may be a minimum sum $Obj_{MinE}$ of a workload energy consumption and an equipment energy consumption of OTN services to be optimized, that is, a minimum energy consumption, in unit of kilowatt-hour, of an entire network for supporting a normal operation of the n OTN services in a certain time period. In the present disclosure, the OTN optimization objective function is an energy consumption optimization objective function, and is expressed as follows:

$$\mathrm{Obj}_{\mathrm{MinE}} \leftarrow \min\left[\left(\sum_{i=1}^{n} \mathrm{E}\left(\mathrm{Svc}_i\right)\right) + \mathrm{E}_{\mathrm{Topo}_A}\right].$$

$E(Svc_i)$ denotes a workload energy consumption of an $i^{th}$ OTN service $Svc_i$ in a current trajectory of creating the n services, that is, an energy consumption of nodes/ports used by a workload, and the workload energy consumption is related to an energy efficiency ratio of nodes/ports passed by an $i^{th}$ OTN service path. $E_{Topo_A}$ denotes an equipment energy consumption of an entire network $Topo_A$ for supporting a normal operation of the n OTN services. For example, a certain network node carries only one OTN service, the service merely occupies part of time slot resources on an line-side OCH, but in order to ensure a normal operation of the service, equipment (such as a main control board) related to the network node is to be powered on to operate, and an Optical Transport Unit (OTU) board and a port which correspond to the OCH are also to be powered on to operate, so that the energy consumption except the energy consumption of the workload of the OTN service is caused, and therefore, $E_{Topo_A}$ may be called extra energy consumption. In the entire network $Topo_A$, the sum of extra energy consumption of all the n OTN services is $E_{TopoA}$.

### 2. Definition of a state

A state $S_t$ (t=0, ..., n-1) represents that t OTN services have been created (including detailed information of all created services) and (n-t) OTN services are to be created (including detailed information of all uncreated OTN services), that is, a $(t+1)^{th}$ OTN service is to be created.

A state $S_n$ represents that the n OTN services have been created in the entire network.

### 3. Definition of a trajectory

A trajectory is defined as sequentially creating the n OTN services in the entire network by adopting a certain action policy.

### 4. Definitions of an instant reward and a final return mechanism

$R_t$ (t=0, ..., n-1) denotes an instant reward obtained by an Agent in the state $S_t$. Taking the OTN optimization objective function being the "minimum network-wide service energy consumption" as an example, the present disclosure adopts a delayed reward mechanism, and a value of $R_t$ is 0.

G denotes a total return obtained by the Agent at an end of a trajectory, $G = \sum_{t=0}^{n} R_t$ , $R_n = G$. A value of G may be defined as a product of a reciprocal of a network-wide service energy consumption value (the unit of energy consumption, i.e., kilowatt-hour, is removed) and 1000, that is, $G = R_n = (1/((\sum_{i=1}^{n} E(Svc_i)) + E_{Topo_A})) \cdot 1000$ , n denotes a total number of the OTN services in the entire network. Thus, the lower the energy consumption of a service distribution scheme is, the higher the total return is.

$G_t$ denotes an expected return of performing an action $a_t$ in the state $S_t$, $G_t = \sum_{k=0}^{n-(t+1)} \gamma^k R_{t+k+1}$ , $\gamma$ denotes a discount factor, $0 < \gamma < 1$.

### 5. Definitions of an action and an action policy

An action at (t=0, ..., n-1) refers to a process of selecting one of the services to be created in a current network topology environment state as the service to be created next, selecting one alternative route from a plurality of alternative routes (routes allocated with network resources, including resources such as delay, bandwidth, availability, and energy consumption) of the service to be created as a resource route of the service to be created, and creating the service.

A plurality of alternative resource routes of a certain OTN service to be created may be sorted based on an optimization policy corresponding to the OTN optimization objective function. If the OTN optimization objective function is the minimum network-wide energy consumption, the plurality of alternative resource routes of the OTN service to be created may be sorted in ascending order of energy consumption.

$SvcID_{t+1}$ denotes a service identification (ID) of the (t+1)$^{th}$ OTN service to be created in the state $S_t$ in the current trajectory of creating the n services, and is determined by the action at.

An action policy $\pi(s, a)$ (also be written as $\pi(s)$) represents a probability of selecting an OTN service to be created and selecting a certain alternative resource route under a condition that the OTN service to be created has been selected, and represents a sequence of creating the OTN services (including the route of the selected OTN service to be created).

### 6. Definition of a state behavior value function and a state value function

A state behavior value function is expressed by $Q_\pi(s,a) = E_\pi \left[ \sum_{k=0}^{n-t-1} \gamma^k R_{t+k+1} \mid s = s_t, a = a_t \right]$ , and represents an expectation of obtaining a desired return after the Agent executes an action a based on the action policy $\pi(s, a)$ from a state S.

The state value function is expressed by $V_\pi(s) = \sum_{a \in A} \pi(a \mid s) Q_\pi(s,a)$ , and represents a weighted sum of all state behavior values $Q_\pi(s, a)$ in the state S. $\pi(a \mid s)$ denotes a probability of executing the action a based on the action policy $\pi(s, a)$ in the state S.

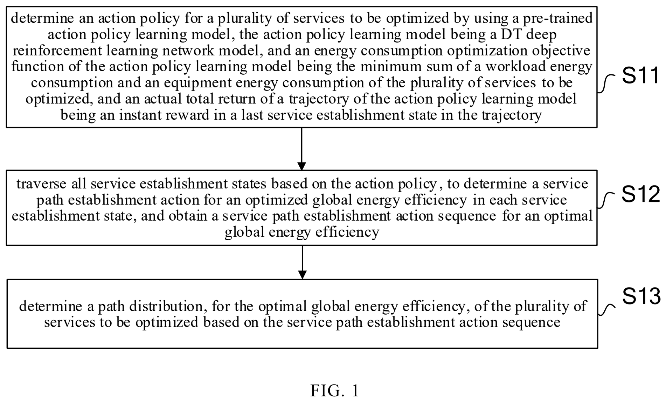

FIG. 1 is a flowcharting illustrating a method for optimizing network energy efficiency according to an embodiment of the present disclosure. As shown in FIG. 1, the method includes following operations S11 to S13.

At operation S11, an action policy for a plurality of services to be optimized is determined based on a pre-trained action policy learning model, the action policy learning model being a DT deep reinforcement learning network model, and an energy consumption optimization objective function of the action policy learning model being a minimum sum of a workload energy consumption and an equipment energy consumption of the plurality of services to be optimized, and an actual total return of a trajectory of the action policy learning model being an instant reward in a last service establishment state in the trajectory.

In the present disclosure, the action policy learning model is a Deep Reinforcement Learning (DRL) network model built by using the DT technology, and a convergence function of the action policy learning model is the energy consumption optimization objective function. Other parameters of the action policy learning model are defined as mentioned above, and will not be repeated here.

At operation S12, all service establishment states are traversed based on the action policy, to determine a service path establishment action for an optimized global energy efficiency in each service establishment state, so as to obtain a service path establishment action sequence for an optimal global energy efficiency.

In an entire network topology environment $Topo_A$, the action policy learned at operation S11 may be further finely tuned by using the MCTS algorithm, so as to obtain the service path establishment action for the optimized global energy efficiency in each service establishment state. Based on the service path establishment action for the optimized global energy efficiency in each service establishment state, a complete service path establishment action sequence for the optimal global energy efficiency can be obtained.

At operation S13, a path distribution, for the optimal global energy efficiency, of the plurality of services to be optimized is determined based on the service path establishment action sequence.

A distribution, for the optimal global energy efficiency, of n services to be optimized may be obtained based on the service path establishment action sequence.

In the method for optimizing network energy efficiency provided in the present disclosure, the action policy for the plurality of services to be optimized is learned by using the DT deep reinforcement learning network model serving as the action policy learning model, the energy consumption optimization objective function of the action policy learning model is the minimum sum of the workload energy consumption and the equipment energy consumption of the services to be optimized, the action policy learning model adopts the delayed reward mechanism, all the service establishment states are traversed based on the action policy, to determine the service path establishment action for the optimized global energy efficiency in each service establishment state, so that the service path establishment action sequence for the optimal global energy efficiency is determined, and the path distribution, for the optimal global energy efficiency, of the services to be optimized is determined based on the service path establishment action sequence. By adopting the DT modeling and analysis technology, a low energy efficiency problem in an operation of network can be effectively identified, and the path distribution of the services for the optimal global energy efficiency can be determined, so as to configure paths with the optimal global energy efficiency for the services, thereby optimizing and improving energy efficiency.

In the entire network topology environment $Topo_A$, the Actor-Critic algorithm may be adopted to obtain a $Q_\omega(s, a)$ state value neural network and a $\pi_\theta(s, a)$ action policy neural network for selecting the distribution of the n services for the optimal global energy efficiency. A process of modeling and model processing by using the Actor-Critic algorithm is described as follows.

Based on the design in the Actor algorithm, a parameterized action policy function is defined as $\pi_\theta(s, a)$, a value of $\pi_\theta(s, a)$ may be deduced from a trained $\pi_\theta$ value deep neural network used for the Actor algorithm, and $\theta$ is a parameter vector of a neural network layer.

Based on the design in the Critic algorithm, a parameterized state behavior value function is defined as $Q_\omega(s, a) = \phi(s, a)^T \cdot \omega$, a value of $Q_\omega(s, a)$ may be deduced from a trained Q value deep neural network used for the Critic algorithm, $\omega$ is a parameter vector of a neural network layer, and $\phi(s, a)$ denotes an eigenvector function of a state S and an action a, and may be used as an input of the Critic deep neural network.

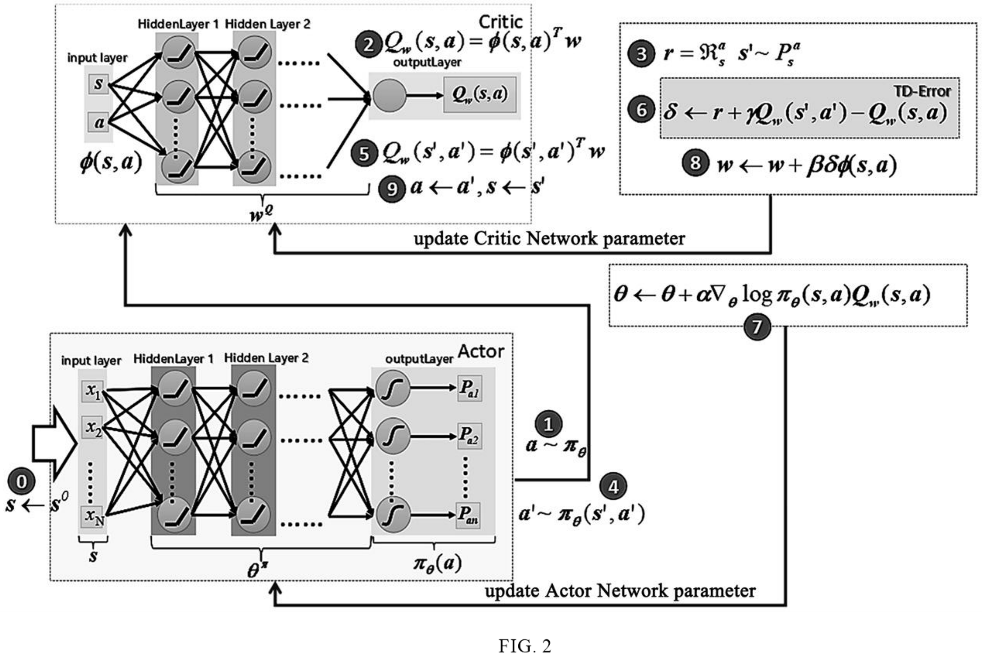

FIG. 2 is a schematic diagram of an action policy learning model obtained by being trained using the QAC algorithm according to an embodiment of the present disclosure. The QAC algorithm is one of typical DRL algorithms. As shown in FIG. 2, a process of determining the action policy for the services to be optimized by using the QAC algorithm in combination with the action policy learning model is as follows.

The entire network topology environment is initialized, which includes initializing $s_0 \in S$ and an action policy parameter vector $\theta$.

Operation A1, initializing a sampling action $a \sim \pi_\theta$ based on the action policy.

Operation A2, calculating a score $Q_\omega(s, a)$ of an action a, $Q_\omega(s, a) = \phi(s, a)^T\omega$.

Each operation of the sampling action includes following operations A3 to A9.

Operation A3, sampling an instant reward $r = R_s^a$, and sampling a next state transition $s' \sim P_s^a$.

Operation A4, sampling a next action $a' \sim \pi_\theta(s', a')$ based on the action policy.

Operation A5, calculating a score $Q_\omega(s', a')$ of an action a',

$Q_\omega(s', a') = \phi(s', a')^T\omega$.

Operation A6, calculating an intermediate value $\delta$, $\delta = r + \gamma Q_\omega(s', a') - Q_\omega(s, a)$.

Operation A7, determining an action policy parameter vector $\theta$, $\theta = \theta + \alpha \nabla_\theta \log \pi_\theta(s, a) Q_\omega(s, a)$, with the action policy parameter vector $\theta$ being an Actor model parameter.

Operation A8, determining $\omega \leftarrow \omega + \beta\delta\phi(s, a)$ based on the intermediate value $\delta$ and a constant $\beta$, with $\omega$ being a Critic model parameter.

Operation A9, updating the action and the state, $a \leftarrow a'$, $s \leftarrow s'$.

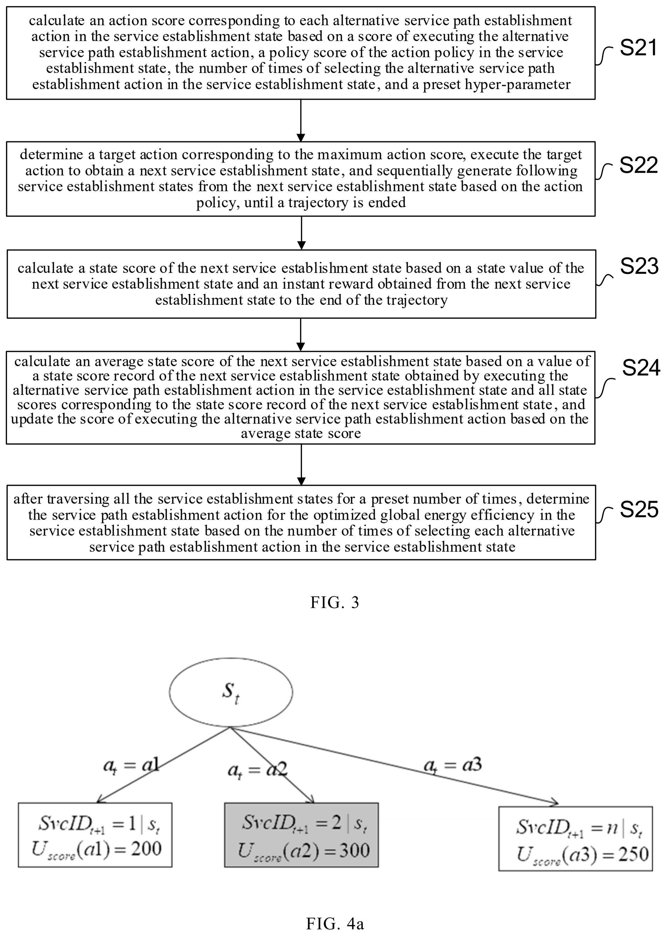

In some implementations, all the service establishment states are traversed by adopting the MCTS algorithm based on the action policy, to detemine the service path establishment action for the optimized global energy efficiency in each service establishment state. As shown in FIG. 3, for each service establishment state, traversing all the service establishment states by adopting the MCTS algorithm based on the action policy, to determine the service path establishment action for the optimized global energy efficiency in the service establishment state includes following operations S21 to S25.

At operation S21, an action score corresponding to each alternative service path establishment action in the service establishment state is calculated based on a score of executing the alternative service path establishment action, a policy score of the action policy in the service establishment state, the number of times of selecting the alternative service path establishment action in the service establishment state, and a preset hyper-parameter.

A service establishment state $S_t$ may correspond to at least one alternative service path establishment action, and different next service establishment states $S_{t+1}$ are obtained by executing different alternative service path establishment actions in the service establishment state $S_t$. In order to select service paths for the optimal global energy efficiency, the most appropriate service path establishment action is to be selected from the alternative service path establishment actions in each service establishment state. At the operation, each alternative service path establishment action is scored to obtain a corresponding action score.

At operation S22, a target action corresponding to the maximum action score is determined, and is executed to obtain a next service establishment state, and following service establishment states are sequentially generated from the next service establishment state based on the action policy until a trajectory is ended.

In the service establishment state $S_t$, the alternative service path establishment action with the highest action score is selected from the alternative service path establishment actions, as an action to be executed for subsequently expanding, and is executed to obtain the next service establishment state $S_{t+1}$. Likewise, the following service establishment states are generated sequentially until a service establishment state $S_n$ is generated, then the current trajectory is ended.

At operation S23, a state score of the next service establishment state is calculated based on a state value of the next service establishment state and an instant reward obtained from the next service establishment state to the end of the trajectory.

At operation S24, an average state score of the next service establishment state is calculated based on a value of a state score record of the next service establishment state obtained by executing the alternative service path establishment action in the service establishment state and state scores corresponding to the state score record of the next service establishment state, and the score of executing the alternative service path establishment action is updated based on the average state score.

A backtracking operation is executed at this operation. The action at is executed for a plurality of times in the service establishment state $S_t$ to perform evaluation and simulation processing for a plurality of times, so that a plurality of corresponding state scores are obtained, and thus the state score record is generated. The state score record includes the plurality of state scores, and a value L of the state score record is the number of times of executing the alternative service path establishment action at in the service establishment state $S_t$. At the operation, the average state score is calculated based on a sum of the state scores and the value L of the state score record, and the score of executing the alternative service path establishing action at is updated based on the average state score.

At operation S25, after traversing all the service establishment states for a preset number of times, the service path establishment action for the optimized global energy efficiency in the service establishment state is determined based on the number of times of selecting each alternative service path establishment action in the service establishment state.

After the MCTS process is performed for a preset number of times, the number of times $N(a_t)$ of selecting each alternative service path establishment action $a_t$ in the service establishment state $S_t$ is obtained, and the alternative service path establishment action $a_t$ with the maximum $N(a_t)$ is selected as the alternative service path establishment action to be selected by an Agent in the service establishment state $S_t$. The preset number of times may be determined based on application expectations of the algorithm.

FIG. 4a to FIG. 4e are schematic diagrams illustrating a determination of a service path establishment action for the optimized global energy efficiency by using the MCTS algorithm according to an embodiment of the present disclosure, and a process of determining the service path establishment action for the optimized global energy efficiency by using the MCTS algorithm is described in detail below with reference to FIG. 4a to FIG. 4e.

As shown in FIG. 4a, in the service establishment state $S_t$, there are three alternative service path establishment actions, i.e., $a_t=a_1$, $a_t=a_2$, $a_t=a_3$, and the action scores corresponding to the three alternative service path establishment actions are respectively calculated by the following formula (1):

$$U_{score}(a_t) = Q(a_t) + \eta \cdot \frac{\pi(a_t \mid s_t)}{1 + N(a_t)} \tag{1}$$

$U_{score}(a_t)$ denotes the action score corresponding to the alternative service path establishment action; $Q(a_t)$ denotes the score of executing the alternative service path establishment action $a_t$ determined by using the MCTS; $\eta$ denotes the preset hyper-parameter, and may be manually adjusted; $\pi(a_t \mid s_t)$ denotes the policy score of the action policy $\pi(s_t)$, which corresponds to the alternative service path establishment action at in the service establishment state $S_t$; and $N(a_t)$ denotes the number of times of selecting the alternative service path establishment action $a_t$ in the service establishment state $S_t$.

The action scores corresponding to the three alternative service path establishment actions are respectively calculated by the formula (1) as $U_{score}(a_1) = 200$, $U_{score}(a_2) = 300$, and $U_{score}(a_3) = 250$.

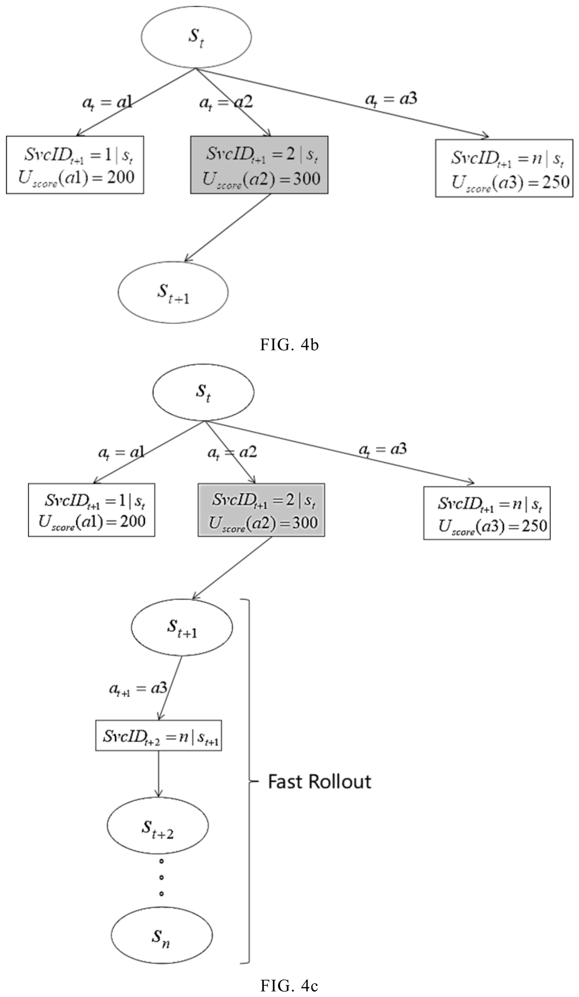

As shown in FIG. 4b, the alternative service path establishment action $a_2$ with the highest action score is selected as the action to be executed for subsequently expanding, and accordingly, the next service establishment state $S_{(t+1)}$ is generated.

As shown in FIG. 4c, a fast rollout or expanding is performed by adopting the action policy $\pi(s_t)$ from the next service establishment state $S_{(t+1)}$ until the service establishment state $S_n$ is generated. The state score of the next service establishment state $S_{(t+1)}$ is calculated by the following formula (2):

$$V_{score}(s_{t+1}) = \frac{1}{2} V_{\pi}(s_{t+1}) + \frac{1}{2} R_n \tag{2}$$

$V_{score}(s_{t+1})$ denotes the state score of the next service establishment state $S_{(t+1)}$; $V_{\pi}(s_{t+1})$ denotes the state value of the next service establishment state $S_{(t+1)}$ in a case of adopting the action policy $\pi(s_t)$; and $R_n$ denotes the instant reward obtained from the next service establishment state $S_{(t+1)}$ to the end of the trajectory (that is, in response to the generation of the service establishment state $S_n$) in a case of adopting the action policy $\pi(s_t)$, $R_n = G$.

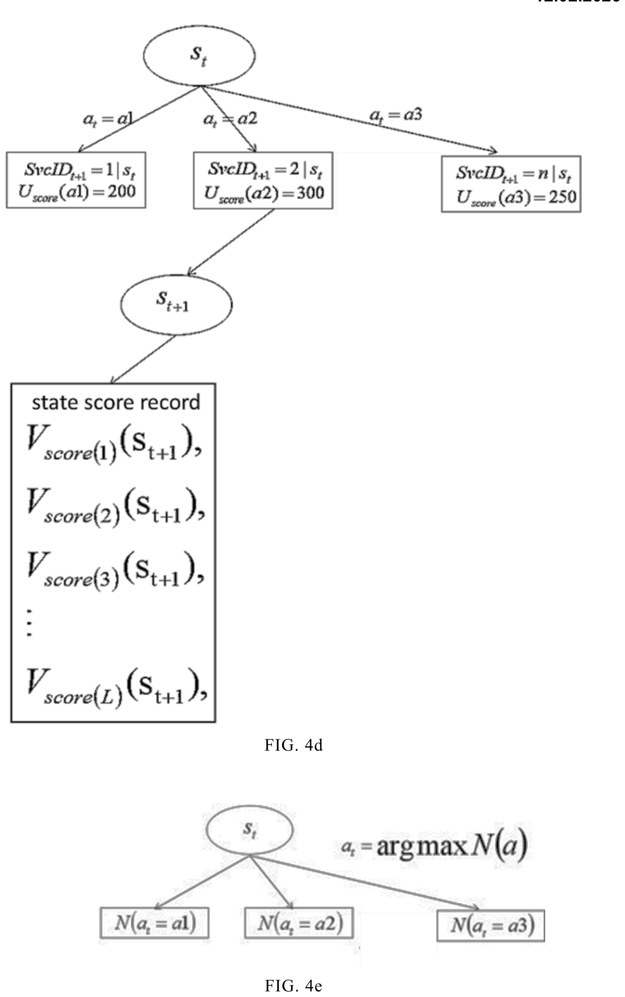

As shown in FIG. 4d, the backtracking operation is performed, that is, the alternative service path establishment action $a_t$ is executed, for performing evaluation and simulation processing for a plurality of times, $V_{score(1)}(s_{t+1})$ obtained by expanding from the next service establishment state $S_{(t+1)}$ is accumulated and averaged, to calculate and update the value of $Q(a_t)$ of the alternative action $a_t$. The average state score of the next service establishment state $S_{(t+1)}$ is calculated and $Q(a_t)$ of the alternative action at is updated by the following formula (3):

$$Q(a_t) = \frac{\sum_{l=1}^{L} V_{score(l)}(S_{t+1})}{L} \tag{3}$$

$Q(a_t)$ denotes as the score of executing the alternative service path establishment action at, denotes the average state score of the next service establishment state $S_{(t+1)}$, and L denotes the value of the state score record of the next service establishment state $S_{(t+1)}$ obtained by executing the alternative service path establishment action $a_t$ in the service establishment state $S_t$.

As shown in FIG. 4e, after the MCTS process is performed for the preset number of times, an action selection decision of the Agent in the service establishment state $S_t$ follows the following principle: at =argmaxN(at), $N(a_t)$ denotes the number of times of selecting each alternative service path establishment action $a_t$ in the service establishment state $S_t$. That is, the alternative service path establishment action with the maximum value of $N(a_t)$ is selected as the service path establishment action to be selected by the Agent in the service establishment state $S_t$.

Through the above operations, the MCTS algorithm may be adopted for each service establishment state, to obtain the service path establishment action to be selected in each service establishment state, that is, in the entire network topology environment $Topo_A$, the service path establishment action for the optimized global energy efficiency in each service establishment state is determined, and the path distribution, for the optimal global energy efficiency of the n services to be optimized is accordingly obtained.

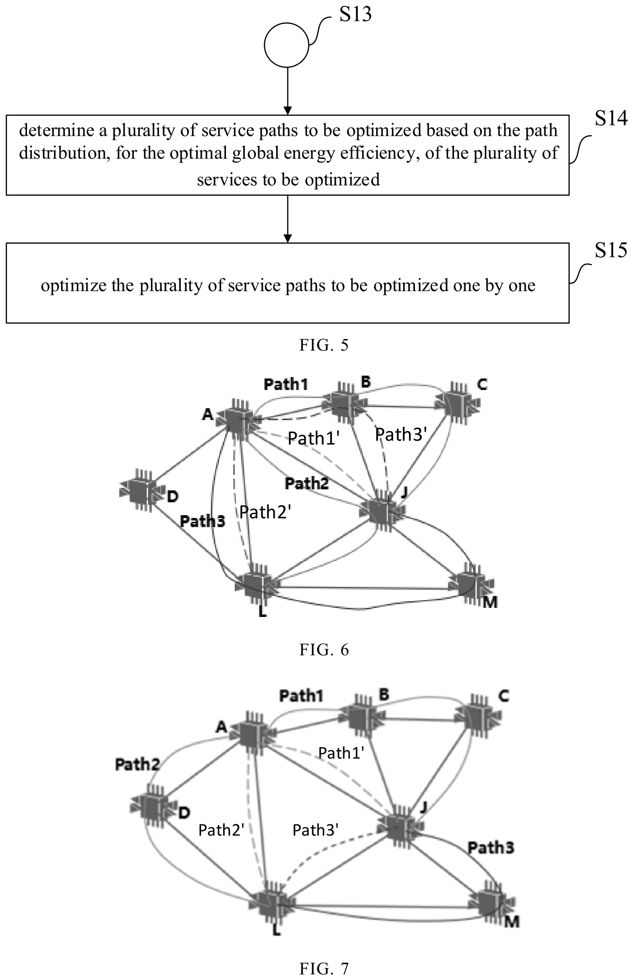

In some implementations, as shown in FIG. 5, after determining the path distribution, for the optimal global energy efficiency, of the plurality of services to be optimized, based on the service path establishment action sequence (i.e., operation S13), the method for optimizing network energy efficiency may further include following operations S14 and S15.

At operation S14, a plurality of service paths to be optimized are determined based on the path distribution, for the optimal global energy efficiency, of the plurality of services to be optimized.

At operation S15, the plurality of service paths to be optimized are optimized one by one.

In some implementations, optimizing the plurality of service paths to be optimized one by one (i.e. operation S15) includes following operations S151 and S152.

At operation S151, the plurality of service paths to be optimized are grouped based on optimization scenarios, with types of the optimization scenarios including a resource-interlock optimization scenario and a resource-independent optimization scenario.

The plurality of service paths to be optimized may be grouped based on a plurality of optimization scenarios in different types, that is, the plurality of service paths to be optimized are grouped based on the resource-interlock optimization scenario and the resource-independent optimization scenario, and for each of the optimization scenarios, the service paths in the optimization scenario are optimized respectively. It should be noted that the plurality of service paths to be optimized may be considered in one type of optimization scenario, in which each service path in the optimization scenario is optimized.

FIG. 6 is a schematic diagram of a resource-interlock optimization scenario according to an embodiment of the present disclosure. As shown in FIG. 6, there are three OTN service paths Path1, Path2, and Path3 in total in the OTN topology, the three OTN service paths are respectively represented by the three solid lines in FIG. 6, and the path distribution, for the optimal global energy efficiency, of the three OTN service paths, which is determined by the DRL&MCTS algorithms, is represented by the three dotted lines in FIG. 6. A resource occupation conflict between a source path of Path2 and a target path Path1' of Path1 obtained by being optimized exists in a link AJ; a resource occupation conflict between a source path of Path3 and a target path Path2' of Path2 obtained by being optimized exists in a link AL; and a resource occupation conflict between a source path of Path1 and a target path Path3' of Path3 obtained by being optimized exists in a link AB.

FIG. 7 is a schematic diagram of a resource-independent optimization scenario according to an embodiment of the present disclosure. As shown in FIG. 7, there are three OTN service paths Path1, Path2, and Path3 in total in the OTN topology, the three OTN service paths are respectively represented by the three solid lines in FIG. 7, and the path distribution, for the optimal global energy efficiency, of the three OTN service paths, which is determined by the DRL&MCTS algorithms, is represented by the three dotted lines in FIG. 7. The resource conflict problem is not to occur in a process of progressively optimizing the three OTN service paths one by one from source paths to target paths, and a resource optimization process of each OTN service path is relatively independent and is not restricted by a resource occupation of the other OTN service paths.

At operation S152, for each optimization scenario, the service paths to be optimized in the optimization scenario are optimized one by one.

Based on the type of the optimization scenario, an optimization policy matched with the type of the optimization scenario is selected for a path migration, so as to migrate each service path to be optimized to a corresponding target path, thereby optimizing energy efficiency.

As can be seen from operations S151 and S152, in the method for optimizing network energy efficiency provided in the present disclosure, W service paths for optimizing energy efficiency in a specified network topology may be obtained by adopting the DRL&MCTS algorithms, and based on a scheme of progressively optimizing, the process of optimizing the W service paths one by one is divided based on two types of resource optimization scenarios, i.e., the resource-interlock optimization scenario and the resource-independent optimization scenario, the number of resource-interlock optimization scenarios is m, m is greater than or equal to 1, the number of resource-independent optimization scenarios is n, and n is greater than or equal to 1, and the service paths in the m resource-interlock optimization scenarios and the n resource-independent optimization scenarios are respectively optimized one by one for progressively optimizing energy efficiency, and in such way, a batch of service paths in the specified network topology can be optimized one by one for progressively optimizing energy efficiency.

Due to the resource interlock problem, the service paths to be optimized cannot be optimized one by one. In view of this, the present disclosure proposes a method of rerouting the service path to be optimized to a temporary path to release resource interlock and thus to optimize the service paths one by one for progressively optimizing energy efficiency.

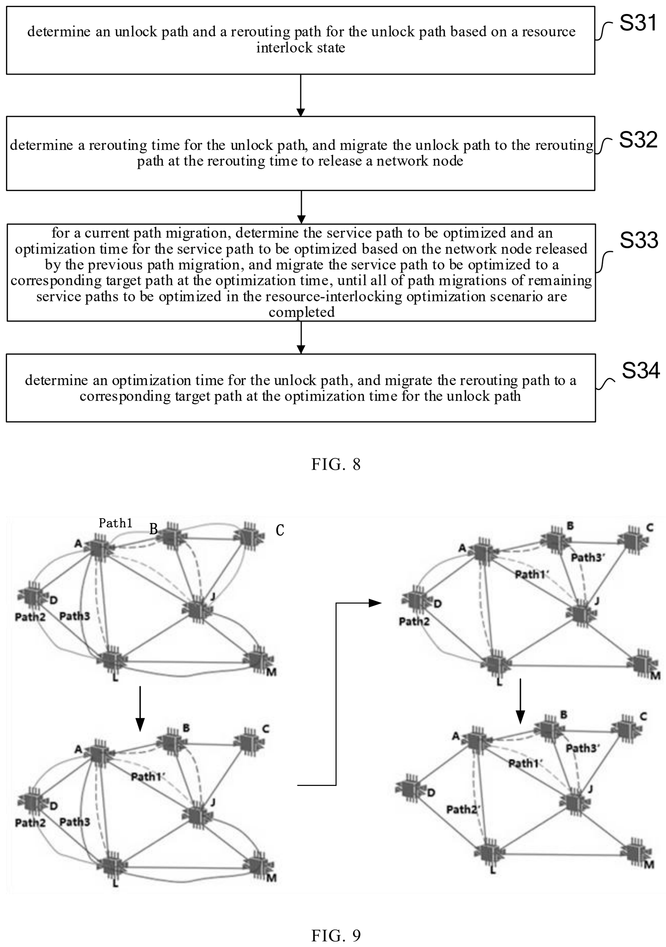

In some implementations, as shown in FIG. 8, for the resource-interlock optimization scenario, optimizing the service paths to be optimized in the optimization scenario one by one (operation S152) includes following operations S31 to S34.

At operation S31, an unlock path and a rerouting path for the unlock path are determined based on a resource interlock state.

The unlock path is one of the service paths to be optimized in the resource-interlock optimization scenario, i.e., the path to be unlocked, that is, the service path (i.e., source path) to be unlocked is found based on the resource interlocking state, the rerouting path for the service path to be unlocked is determined, and a start node and an end node of the rerouting path correspond to a start node and an end node of the unlock path, respectively.

At operation S32, a rerouting time for the unlock path is determined, and the unlock path is migrated to the rerouting path at the rerouting time to release a network node.

At this operation, a migration of the unlock path is completed, thereby releasing the network node occupied by the unlock path but to be occupied by the target path of another service path to be optimized.

At operation S33, the service path to be optimized in a current path migration and an optimization time for optimizing the service path are determined based on the network node released by a previous path migration, and the service path to be optimized in the current path migration is migrated to a corresponding target path at the optimization time, until all of path migrations of remaining service paths to be optimized in the resource-interlock optimization scenario are completed.

After the migration of the unlock path is completed, the service path to be optimized in the current path migration and the optimization time for optimizing the service path are determined based on the network node released at operation S32, and the service path to be optimized is migrated to the target path corresponding thereto at the optimization time, thereby completing the current path migration. A network node is also released in the current path migration, and then a next path migration is performed as operation S33 based on the network node released in the current path migration, and so on, until all the path migrations of the remaining service paths to be optimized in the resource-interlock optimization scenario are completed.

At operation S34, an optimization time for the unlock path is determined, and the rerouting path is migrated to a corresponding target path at the optimization time for the unlock path.

After all the path migrations of the remaining service paths to be optimized except the unlock path in the resource-interlock optimization scenario are completed, the optimization time for the unlock path is determined, and the rerouting path is migrated to the corresponding target path at the optimization time for the unlock path.

In some implementations, determining the optimization time for the service path to be optimized includes: predicting a traffic of the service path to be optimized; determining a low tide time of the service path to be optimized based on the traffic of the service path to be optimized; and determining the optimization time for the service path based on the low tide time. In the resource-interlock optimization scenario, for the current path migration, the optimization time for the service path to be optimized is determined based on the low tide time of the service path to be optimized. That is, during the path migration, after the service path to be migrated currently is determined, the optimization time for optimizing the service path is determined based on the low tide time of the service path. It should be noted that the low tide time refers to a time at which the traffic of the service is relatively low, and the low tide time of the service path typically occurs periodically, for example, if the traffic of a certain service path is relatively low from 23:00 on a certain day to 5:00 on the next day, the low tide time of the service path may be selected from the time period from 23:00 on the certain day to 5:00 on the next day. The optimization time is a specific time determined based on the low tide time, for example, the optimization time is 23:30 on a certain day in a certain month of a certain year.

In order to ensure that the path migration can be performed normally and is not affected due to a resource conflict, in some implementations, a time interval between two adjacent optimization times for optimizing the service paths to be optimized is greater than a preset threshold. That is, the time interval between the optimization times for two service paths which are subjected to path migration successively is greater than the preset threshold, for example, the time interval is greater than or equal to 1 day. It should be noted that, in the resource-interlock optimization scenario, a time interval between the rerouting time and the optimization time for the service path which is subjected to path migration first is greater than a preset threshold, and a time interval between the optimization times for any two service paths which are subjected to path migration successively is greater than a preset threshold.

In order to clarity the technical solution in the method for optimizing network energy efficiency provided in the present disclosure, a process of performing path migration in the resource-interlock optimization scenario is described in detail below with reference to FIG. 6, FIG. 9, and FIG. 10. The three OTN service paths Path1, Path2, and Path3 represented by the solid lines in FIG. 6 are respectively migrated to the three OTN service paths Path1', Path2', and Path3' represented by the dotted lines in FIG. 6 for the optimal global energy efficiency. As shown in FIG. 9, the process of performing path migration in the resource-interlock optimization scenario includes following operations B1 to B4.

At operation B1, the OTN service path Path2 is rerouted from a source path A-J-L to a temporary path A-D-L, so that a network node J occupied by the source path of the OTN service path Path2 is released, which solves the resource interlock problem in the process of optimizing energy efficiency for Path1, Path2, and Path3 one by one.

At operation B2, the OTN service path Path1 is migrated from a source path A-B-C-J to a target path A-J to obtain the OTN service path Path1' for the optimal global energy efficiency and release network nodes B and C.

At operation B3, the OTN service path Path3 is migrated from a source path A-L-M-J to a target path A-B-J to obtain the OTN service path Path3' for the optimal global energy efficiency and release network nodes L and M.

At operation B4, the OTN service path Path2 is migrated from the temporary path A-D-L to a target path A-L to obtain the OTN service path Path2' for the optimal global energy efficiency.

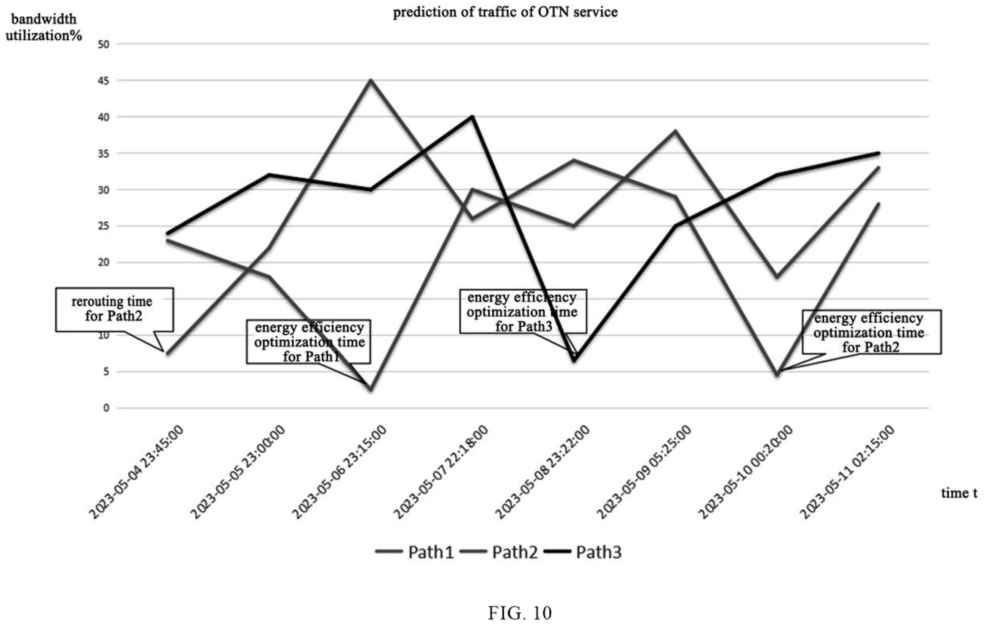

For the above four operations, FIG. 10 shows an execution time (i.e., the rerouting time or the optimization time) of each operation, the execution time is obtained by predicting the low tide time of the traffic of each OTN service path by using a time series AI algorithm such as the Informer algorithm based on an execution sequence of executing the four operations, and a time interval between execution times of any two adjacent operations is greater than 1 day.

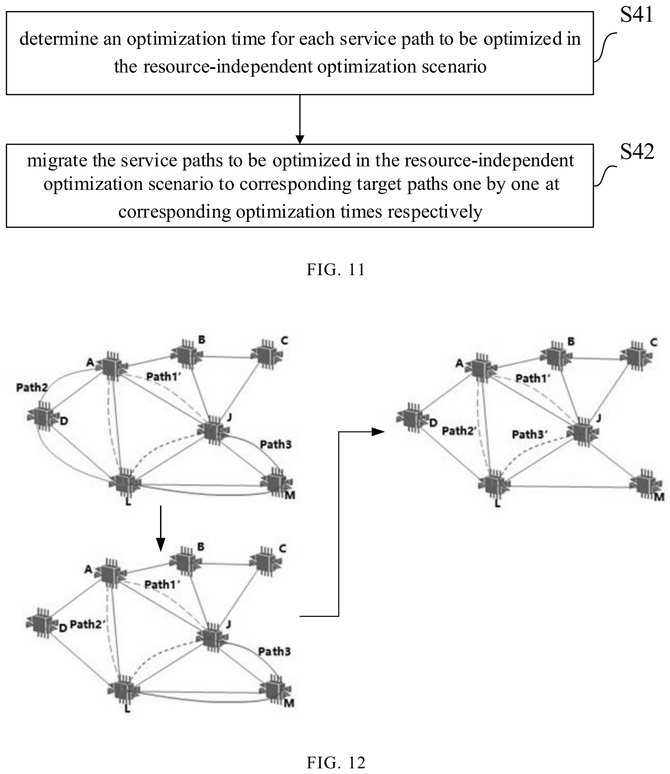

In some implementations, as shown in FIG. 11, for the resource-independent optimization scenario, optimizing the service paths in the optimization scenario one by one (operation S152) includes following operations S41 and S42.

At operation S41, an optimization time for optimizing each service path in the resource-independent optimization scenario is determined.

At operation S42, the service paths to be optimized in the resource-independent optimization scenario are migrated to corresponding target paths one by one at optimization times corresponding thereto.

In some implementations, determining the optimization time for optimizing each service path (operation S41) includes: predicting a traffic of the service path to be optimized; determining a low tide time of the service path to be optimized based on the traffic of the service path; and determining the optimization time for optimizing the service path based on the low tide time. In the resource-independent optimization scenario, a migration sequence is determined, and the optimization time for optimizing each service path is determined based on the migration sequence; since resource interlock does not occur, the migration sequence of the service paths is not limited and may be randomly generated. That is, after the low tide time of each service path is determined, the optimization time for optimizing each service path is determined based on the low tide time and the migration sequence.

In order to ensure that path migration can be performed normally and is not affected each other due to a resource conflict, in some implementations, a time interval between two adjacent optimization times for optimizing the service paths to be optimized is greater than a preset threshold. That is, the time interval between the optimization times for optimizing two service paths which are subjected to path migration successively is greater than the preset threshold. That is, in the resource-independent optimization scenario, the time interval between the optimization times of optimizing any two service paths to be optimized is greater than the preset threshold, for example, the time interval is greater than or equal to 1 day.

In order to clarity the technical solution in the method for optimizing network energy efficiency provided in the present disclosure, a process of performing path migration in the resource-independent optimization scenario is described in detail below with reference to FIG. 7, FIG. 12, and FIG. 13. The three OTN service paths Path1, Path2, and Path3 represented by the solid lines in FIG. 7 are respectively migrated to the three OTN service paths Path1', Path2', and Path3' represented by the dotted lines in FIG. 7 for the optimal global energy efficiency. As shown in FIG. 12, the process of performing path migration in the resource-independent optimization scenario includes following operations C1 to C3.

At operation C1, the OTN service path Path1 is migrated from a source path A-B-C-J to a target path A-J.

At operation C2, the OTN service path Path2 is migrated from a source path A-D-L to a target path A-L.

At operation C3, the OTN service path Path3 is migrated from a source path J-M-L to a target path J-L.

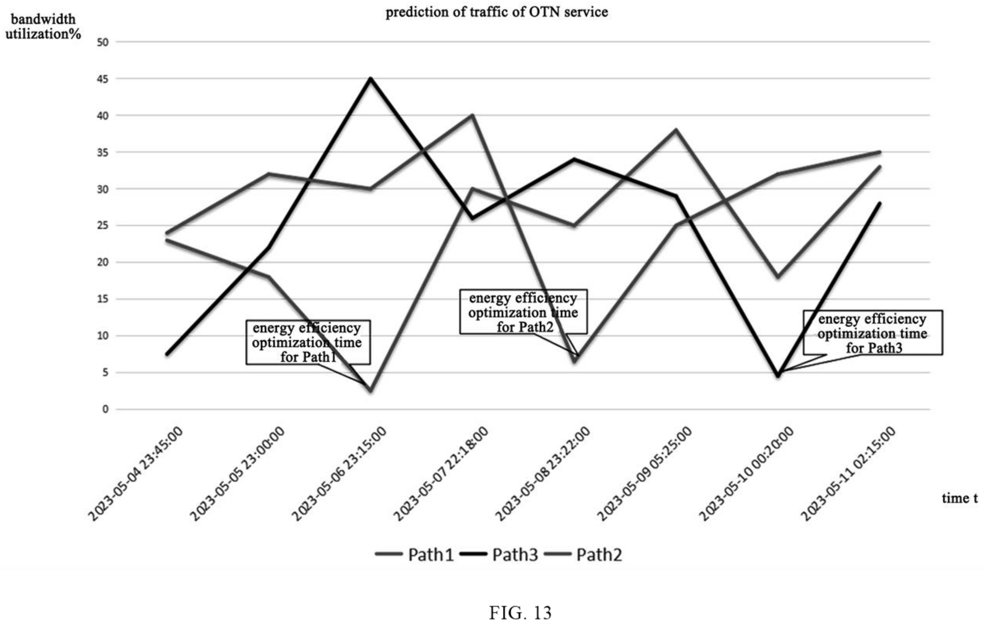

For the above three operations, FIG. 13 shows an execution time (i.e., the optimization time) of each operation, the execution time is obtained by predicting the low tide time of the traffic of each OTN service path by using a time series AI algorithm such as the Informer algorithm based on an execution sequence of executing the three operations, and a time interval between execution times of any two adjacent operations is greater than 1 day.

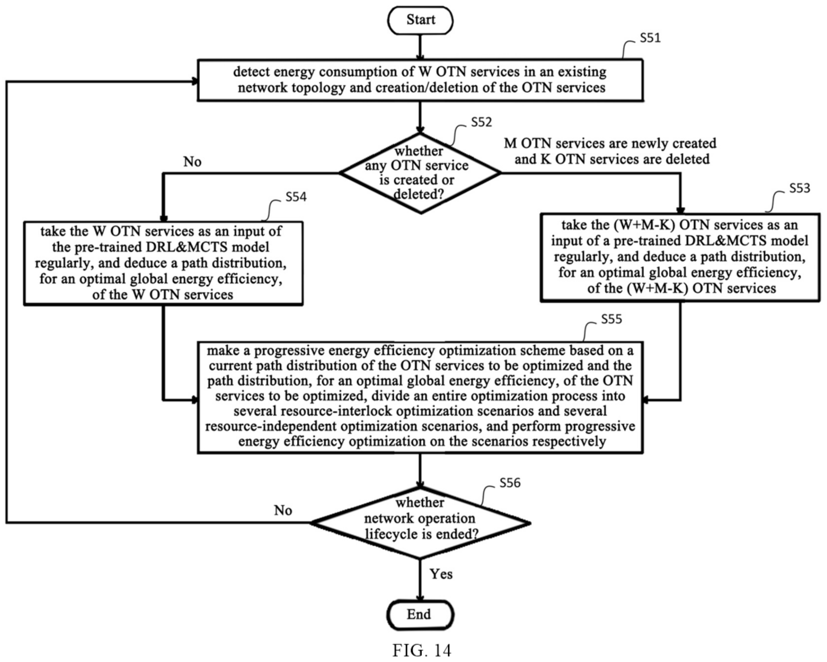

FIG. 14 is a flowchart illustrating a method for optimizing OTN network energy efficiency according to an example of the present disclosure. As shown in FIG. 14, the process of optimizing network energy efficiency includes following operations S51 to S56.

At operation S51, energy consumption of W OTN services in an existing network topology and creation/deletion of the OTN services are detected.

At operation S52, it is determined whether any OTN service is created or deleted, if M OTN services are newly created and K OTN services are deleted, operation S53 is to be performed, and if no OTN service is created or deleted, operation S54 is to be performed.

At operation S53, the (W+M-K) OTN services are taken as an input of a pre-trained DRL&MCTS model regularly, and a path distribution, for the optimal global energy efficiency, of the (W+M-K) OTN services is deduced.

The number of the OTN services to be optimized is (W+M-K).

At operation S54, the W OTN services are taken as an input of the pre-trained DRL&MCTS model regularly, and a path distribution, for the optimal global energy efficiency, of the W OTN services is deduced.

The number of the OTN services to be optimized is W.

At operation S55, a progressive energy efficiency optimization scheme is made based on a current path distribution of the OTN services to be optimized and the path distribution, for the optimal global energy efficiency, of the OTN services to be optimized, an entire optimization process is divided into several resource-interlock optimization scenarios and several resource-independent optimization scenarios, and progressive energy efficiency optimization is performed on the scenarios respectively.

At operation S56, it is determined whether network operation lifecycle (lifecycle of network operating) is ended, if the network operation lifecycle is not ended, operation S51 is to be performed, and if the network operation lifecycle is ended, the process is ended.

The present disclosure relates to the field of DT modeling application in the field of core capabilities of identification and optimization of the energy efficiency problem in the AN OTNs, and provides a method for identifying and optimizing the energy efficiency problem of the OTNs by adopting the DT technology in AN OTN scenarios, and the provided method for optimizing network energy efficiency has relatively little impact on operation of the existing network and is unperceptive to users.

An embodiment of the present disclosure further provides a computer device, including: at least one processor; and a storage device having stored therein at least one computer program, the at least one computer program is to be executed by the at least one processor, to cause the at least one processor to implement the method for optimizing network energy efficiency as described above.

An embodiment of the present disclosure further provides a computer-readable storage medium having stored therein a computer program, the computer program is to be executed by a processor, to cause the processor to implement the method for optimizing network energy efficiency as described above.

It should be understood by those of ordinary skill in the art that the functional modules/units in the device for all or some of the operations in the method disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or operation may be performed through cooperation of several physical components. Some or all of the physical components may be implemented as software executed by a processor, such as a Central Processing Unit (CPU), a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable medium used in any method or technology for storing information (such as computer-readable instructions, data structures, program modules or other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication medium generally includes computer-readable instructions, data structures, program modules, or other data in modulated data signals such as carriers or other transmission mechanisms, and may include any information delivery medium.

The present disclosure discloses the exemplary implementations using specific terms, but the terms are merely used and should be merely interpreted as having general illustrative meanings, rather than for the purpose of limitation. Unless otherwise expressly stated, it is apparent to those of ordinary skill in the art that the features, characteristics and/or elements described in connection with a particular embodiment can be used alone or in combination with the features, characteristics and/or elements described in connection with other embodiments. Therefore, it should be understood by those of ordinary skill in the art that various changes in forms and details can be made without departing from the scope of the present disclosure as clarified by the appended claims.

**Claims**

1. A method for optimizing network energy efficiency, comprising:

   determining an action policy for a plurality of services to be optimized based on a pre-trained action policy learning model, the action policy learning model being a digital twin deep reinforcement learning network model, an energy consumption optimization objective function of the action policy learning model being a minimum sum of a workload energy consumption and an equipment energy consumption of the plurality of services to be optimized, and an actual total return of a trajectory of the action policy learning model being an instant reward in a last service establishment state in the trajectory;
   traversing all service establishment states based on the action policy, to determine a service path establishment action for an optimized global energy efficiency in each service establishment state, so as to obtain a service path establishment action sequence for an optimal global energy efficiency; and
   determining a path distribution, for the optimal global energy efficiency, of the plurality of services to be optimized based on the service path establishment action sequence.

2. The method of claim 1, wherein traversing all the service establishment states based on the action policy to determine the service path establishment action for the optimized global energy efficiency in each service establishment state comprises:

for each service establishment state, respectively calculating an action score corresponding to each alternative service path establishment action in the service establishment state by adopting a Monte Carlo Tree Search (MCTS) algorithm based on a score of executing the alternative service path establishment action, a policy score of the action policy in the service establishment state, a number of times of selecting the alternative service path establishment action in the service establishment state, and a preset hyper-parameter;

determining a target action corresponding to a maximum action score, executing the target action to obtain a next service establishment state, and sequentially generating following service establishment states from the next service establishment state based on the action policy, until a trajectory is ended;

calculating a state score of the next service establishment state based on a state value of the next service establishment state and an instant reward obtained from the next service establishment state to an end of the trajectory;

calculating an average state score of the next service establishment state based on a value of a state score record of the next service establishment state obtained by executing the alternative service path establishment action in the service establishment state and all state scores corresponding to the state score record of the next service establishment state, and updating the score of executing the alternative service path establishment action based on the average state score;

after traversing all the service establishment states for a preset number of times, determining the service path establishment action for the optimized global energy efficiency in the service establishment state based on a number of times of selecting each alternative service path establishment action in the service establishment state.

3. The method of claim 1, further comprising:

after determining the path distribution, for the optimal global energy efficiency, of the plurality of services to be optimized based on the service path establishment action sequence, determining a plurality of service paths to be optimized based on the path distribution, for the optimal global energy efficiency, of the plurality of services to be optimized; and

optimizing the plurality of service paths to be optimized one by one.

4. The method of claim 3, wherein optimizing the plurality of service paths to be optimized one by one comprises:

grouping the plurality of service paths to be optimized based on optimization scenarios, types of the optimization scenarios comprising a resource-interlock optimization scenario and a resource-independent optimization scenario; and

for each optimization scenario, optimizing the service paths to be optimized in the optimization scenario one by one.

5. The method of claim 4, wherein for the resource-interlock optimization scenario, optimizing the service paths to be optimized in the optimization scenario one by one comprises:

determining an unlock path and a rerouting path for the unlock path based on a resource interlock state, the unlock path being one of the service paths to be optimized in the resource-interlock optimization scenario;

determining a rerouting time for the unlock path, and migrating the unlock path to the rerouting path at the rerouting time to release a network node;

determining the service path to be optimized in a current path migration and an optimization time for optimizing the service path to be optimized based on the network node released by a previous path migration, and migrating the service path to be optimized in the current path migration to a corresponding target path at the optimization time, until all of path migrations of remaining service paths to be optimized in the resource-interlock optimization scenario are completed; and

determining an optimization time for the unlock path, and migrating the rerouting path to a corresponding target path at the optimization time for the unlock path.

6. The method of claim 4, wherein for the resource-independent optimization scenario, optimizing the service paths to be optimized in the optimization scenario one by one comprises:

determining an optimization time for optimizing each service path to be optimized in the resource-independent optimization scenario; and

migrating the service paths to be optimized in the resource-independent optimization scenario to corresponding target paths one by one at optimization times for optimizing the service paths, respectively.

7. The method of claim 5 or 6, wherein determining the optimization time for optimizing the service path to be optimized comprises:

predicting a traffic of the service path to be optimized;
determining a low tide time of the service path to be optimized based on the traffic of the service to be optimized; and
determining the optimization time for optimizing the service path based on the low tide time, in the resource-interlock optimization scenario, for the current path migration, the optimization time for optimizing the service path being determined based on the low tide time of the service path to be optimized, and in the resource-independent optimization scenario, a migration sequence being determined, and the optimization time for optimizing each service path to be optimized being determined based on the migration sequence.

8. The method of claim 5 or 6, wherein a time interval between two optimization times for optimizing the service paths to be optimized is greater than a preset threshold.

9. A computer device, comprising:

at least one processor; and
a storage device having stored therein at least one computer program,
the at least one computer program is to be executed by the at least one processor, to cause the at least one processor to implement the method of any one of claims 1 to 8.

10. A computer-readable storage medium having stored therein a computer program, the computer program is to be executed by a processor, to cause the processor to implement the method of any one of claims 1 to 8.

determine an action policy for a plurality of services to be optimized by using a pre-trained action policy learning model, the action policy learning model being a DT deep reinforcement learning network model, and an energy consumption optimization objective function of the action policy learning model being the minimum sum of a workload energy consumption and an equipment energy consumption of the plurality of services to be optimized, and an actual total return of a trajectory of the action policy learning model being an instant reward in a last service establishment state in the trajectory

S11

traverse all service establishment states based on the action policy, to determine a service path establishment action for an optimized global energy efficiency in each service establishment state, and obtain a service path establishment action sequence for an optimal global energy efficiency

S12

determine a path distribution, for the optimal global energy efficiency, of the plurality of services to be optimized based on the service path establishment action sequence

S13

FIG. 1

FIG. 2

| | |
|---|---|
| calculate an action score corresponding to each alternative service path establishment action in the service establishment state based on a score of executing the alternative service path establishment action, a policy score of the action policy in the service establishment state, the number of times of selecting the alternative service path establishment action in the service establishment state, and a preset hyper-parameter | S21 |
| determine a target action corresponding to the maximum action score, execute the target action to obtain a next service establishment state, and sequentially generate following service establishment states from the next service establishment state based on the action policy, until a trajectory is ended | S22 |
| calculate a state score of the next service establishment state based on a state value of the next service establishment state and an instant reward obtained from the next service establishment state to the end of the trajectory | S23 |
| calculate an average state score of the next service establishment state based on a value of a state score record of the next service establishment state obtained by executing the alternative service path establishment action in the service establishment state and all state scores corresponding to the state score record of the next service establishment state, and update the score of executing the alternative service path establishment action based on the average state score | S24 |
| after traversing all the service establishment states for a preset number of times, determine the service path establishment action for the optimized global energy efficiency in the service establishment state based on the number of times of selecting each alternative service path establishment action in the service establishment state | S25 |

FIG. 3

FIG. 4a

$S_t$

$a_t = a1$   $a_t = a2$   $a_t = a3$

$SvcID_{t+1} = 1 \,|\, s_t$
$U_{score}(a1) = 200$

$SvcID_{t+1} = 2 \,|\, s_t$
$U_{score}(a2) = 300$

$SvcID_{t+1} = n \,|\, s_t$
$U_{score}(a3) = 250$

$S_{t+1}$

FIG. 4b

$S_t$

$a_t = a1$   $a_t = a2$   $a_t = a3$

$SvcID_{t+1} = 1 \,|\, s_t$
$U_{score}(a1) = 200$

$SvcID_{t+1} = 2 \,|\, s_t$
$U_{score}(a2) = 300$

$SvcID_{t+1} = n \,|\, s_t$
$U_{score}(a3) = 250$

$S_{t+1}$

$a_{t+1} = a3$

$SvcID_{t+2} = n \,|\, s_{t+1}$

Fast Rollout

$S_{t+2}$

$S_n$

FIG. 4c

FIG. 4d

FIG. 4e

FIG. 5

FIG. 6

FIG. 7

determine an unlock path and a rerouting path for the unlock path based on a resource interlock state ⌐ S31

determine a rerouting time for the unlock path, and migrate the unlock path to the rerouting path at the rerouting time to release a network node ⌐ S32

for a current path migration, determine the service path to be optimized and an optimization time for the service path to be optimized based on the network node released by the previous path migration, and migrate the service path to be optimized to a corresponding target path at the optimization time, until all of path migrations of remaining service paths to be optimized in the resource-interlocking optimization scenario are completed ⌐ S33

determine an optimization time for the unlock path, and migrate the rerouting path to a corresponding target path at the optimization time for the unlock path ⌐ S34

FIG. 8

FIG. 9

FIG. 10

determine an optimization time for each service path to be optimized in the resource-independent optimization scenario

S41

migrate the service paths to be optimized in the resource-independent optimization scenario to corresponding target paths one by one at corresponding optimization times respectively

S42

FIG. 11

FIG. 12

FIG. 13

Start

S51 — detect energy consumption of W OTN services in an existing network topology and creation/deletion of the OTN services

S52 — whether any OTN service is created or deleted?

No → S54 — take the W OTN services as an input of the pre-trained DRL&MCTS model regularly, and deduce a path distribution, for an optimal global energy efficiency, of the W OTN services

M OTN services are newly created and K OTN services are deleted → S53 — take the (W+M-K) OTN services as an input of a pre-trained DRL&MCTS model regularly, and deduce a path distribution, for an optimal global energy efficiency, of the (W+M-K) OTN services

S55 — make a progressive energy efficiency optimization scheme based on a current path distribution of the OTN services to be optimized and the path distribution, for an optimal global energy efficiency, of the OTN services to be optimized, divide an entire optimization process into several resource-interlock optimization scenarios and several resource-independent optimization scenarios, and perform progressive energy efficiency optimization on the scenarios respectively

S56 — whether network operation lifecycle is ended?

No → (loop back)

Yes → End

FIG. 14

## INTERNATIONAL SEARCH REPORT

| International application No. |
|---|
| **PCT/CN2024/101231** |

**A. CLASSIFICATION OF SUBJECT MATTER**

H04L41/16(2022.01)i

According to International Patent Classification (IPC) or to both national classification and IPC

**B. FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CJFD; CNTXT; ENTXTC; CNKI; VEN: 光网络, 优化, 深度强化学习, 业务, 创建, 建立, 动作, 行动, 策略, 路径, 路由, 分布, 能耗, 能效, 数字孪生, 全局, OTN, optical transport network, Learn+, action, strategy, policy, establish+, optimizat+, Digital Twin, DT, global, Path, Energy consumption, Q-Based Actor-Critic

**C. DOCUMENTS CONSIDERED TO BE RELEVANT**

| Category* | Citation of document, with indication, where appropriate, of the relevant passages | Relevant to claim No. |
|---|---|---|
| A | CN 114125593 A (ZTE CORP.) 01 March 2022 (2022-03-01)<br>description, paragraphs [0030]-[0194] | 1-10 |
| A | CN 113849313 A (ZHENGZHOU UNIVERSITY) 28 December 2021 (2021-12-28)<br>entire document | 1-10 |
| A | CN 114125595 A (ZTE CORP.) 01 March 2022 (2022-03-01)<br>entire document | 1-10 |
| A | WO 2023045565 A1 (ZTE CORP.) 30 March 2023 (2023-03-30)<br>entire document | 1-10 |
| A | CN 115017817 A (SHANGHAI DISCOVERY ENERGY SERVICES CO., LTD. et al.) 06 September 2022 (2022-09-06)<br>entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 September 2024** | **04 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/101231**

| Patent document cited in search report | | | Publication date (day/month/year) | Patent family member(s) | Publication date (day/month/year) |
|---|---|---|---|---|---|
| CN | 114125593 | A | 01 March 2022 | None | |
| CN | 113849313 | A | 28 December 2021 | None | |
| CN | 114125595 | A | 01 March 2022 | None | |
| WO | 2023045565 | A1 | 30 March 2023 | None | |
| CN | 115017817 | A | 06 September 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310906270